# EUROPEAN PATENT SPECIFICATION

(11) **EP 1 068 278 B1**
(45) Date of publication and mention of the grant of the patent: **28.05.2003**
(21) Application number: 99909415.4
(22) Date of filing: 09.03.1999
(51) Int. Cl.: C09K 11/02

(54) **AN AFTERGLOWING COMPOSITION WITH A BASE OF A THERMOPLASTIC RUBBER, A PRODUCT PROVIDED THEREWITH AND USE THEREOF AS A SAFETY-ENHANCING MEDIUM**
NACHLEUCHTENDE ZUSAMMENSETZUNG AUF BASIS VON THERMOPLASTISCHEM GUMMI,PRODUKT DAMIT UND ANWENDUNG DAVON ALS EIN SICHERHEITSBEFÖRDERENDES MITTEL
COMPOSITION PHOSPHORESCENTE COMPORTANT UNE BASE DE CAOUTCHOUC THERMOPLASTIQUE, PRODUIT CONTENANT CETTE COMPOSITION ET SON UTILISATION COMME MOYEN D'AMELIORATION DE LA SECURITE

(30) Priority: 25.03.1998 NL 1008695
(43) Date of publication of application: 17.01.2001
(73) Proprietor: Beele Engineering B.V., 7122 NZ Aalten (NL)
(72) Inventor: BEELE, Johannes, Alfred, NL-7122 NZ Aalten (NL)
(74) Representative: Hooiveld, Arjen Jan Winfried
(86) International application number: NL9900127
(87) International publication number: WO99048995

(56) References cited:
- EP-A- 0 710 709
- EP-A- 0 853 112
- GB-A- 2 017 741
- GB-A- 2 085 465
- US-A- 3 661 790
- DATABASE WPI Section Ch, Week 9737 Derwent Publications Ltd., London, GB; Class A26, AN 97-399799 XP002084576 & JP 09 176549 A (MITSUBISHI PENCIL CO LTD), 8 July 1997

## Description

The invention relates to an afterglowing composition with a base of a synthetic rubber and an afterglowing pigment.

Afterglowing compositions with a base of a synthetic rubber and an afterglowing pigment are known. NL-A-1003713 shows such an afterglowing composition with a base of a silicone rubber.

One drawback of the known afterglowing compositions is the fact that their mechanical properties, such as their resistance to wear, their tensile strength, elasticity etc. are inadequate.

The objective of the invention is to overcome the above drawbacks, at least partially so, and in order to accomplish that objective the invention provides an afterglowing composition with a base of a thermoplastic rubber and an afterglowing pigment, wherein the composition is provided with an adhesive for bonding the afterglowing pigment to the thermoplastic rubber base material causing an improved mixture thereof.

Thermoplastic rubbers (or thermoplastic block polymers) possess the material properties of rubber, such as its elasticity and flexibility, and also the processing properties of plastics, as a result of which the mechanical properties of afterglowing compositions according to the invention are adequate, thus providing a wide range of uses.

According to the invention, the synthetic rubber is a thermoplastic rubber, wherein the composition is provided with an adhesive for bonding the afterglowing pigment to the thermoplastic rubber base material. The thermoplastic rubber base material, which may consist of grains, granulates, chips or a powder, for example, generally has a particle size which is considerably larger than the particle size of the afterglowing pigment. Furthermore, the specific mass of the thermoplastic material will be considerably smaller than the specific mass of the afterglowing pigment. As a result of this, in general it will be difficult to realise a finely distributed mixture of the two products, which mixture is necessary to obtain a satisfactory processing of the afterglowing composition.

It is also an objective of the invention to obviate this drawback, and in order to accomplish that objective, the invention provides the adhesive which causes the afterglowing pigments to adhere to the thermoplastic rubber base material, thus achieving a satisfactory mixing result.

GB-A 2 017 741 dicloses the incorporation of phosphorescent pigments, suitably in amounts of 10-30 wt%, in "sheet or moulding plastic" or in coatings and mentions the utility of such compositions for enhancing the safety.

EP-A 710 709 discloses novel phosphorescent pigments with long afterglow, which may be incorporated in plastic material and rubber.

Preferably, the afterglowing composition according to the invention comprises 0.1 - 10 % by weight, more preferably 0.1 - 30 % by weight, of an afterglowing pigment.

The term afterglowing pigment which is used in the description is understood to mean a fluorescent and/or phosphorescent pigment. Fluorescence is the process wherein radiation is emitted as a result of a transition between two molecular energy levels having the same spin condition, whilst in the case of phosphorescence radiation is emitted as a result of a transition between two molecular energy levels having different spin conditions. The duration of fluorescence is very short and generally this only occurs perceptibly when a fluorescent pigment is exposed to light. Phosphorescent pigments, however, are capable of emitting light for a much longer a period of time after being exposed to light. Another advantage of both fluorescent and phosphorescent pigments is the fact that they are capable of emitting light of a different wavelength or a different wave-range than the light to which it is being exposed or to which it was initially exposed. Thus, such a pigment is capable of emitting light of a particular colour or a particular shade of colour after or upon being exposed, for example to "white light". The composition according to the invention preferably contains 3 - 10 % by weight of the afterglowing pigment, especially when it concerns a pigment comprising an alkaline-earth metal-containing aluminate which is doped with one or more transition metals. If the pigment is a prior art pigment, for example a pigment which consists exclusively of zinc sulphide and copper, the concentration will be about double this amount.

Preferably, the thermoplastic rubber according to the invention is a block copolymer selected from the group consisting of SBS (styrene-butadiene-styrene-3-block copolymer), SIS (styrene-isopropene-styrene) and SEBS (styrene-ethylene-butylene-styrene). More preferably, the thermoplastic rubber is SEBS, preferably in an at least partially transparent form. Because of its mechanical and optical properties, such as its transparency and refractive index, the use of SEBS offers advantages as regards the processing and use thereof, and, moreover, a transparent form will reduce the required concentration of an afterglowing pigment.

Preferably, the adhesive according to the invention consists of a medium with a base of a viscous oil, which oil is at least partially transparent and which preferably has a viscosity of 50 - 2,000 mPa.s, more preferably of 100 - 1,000 mPa.s. Such an adhesive will effect an adequate adherence and distribution of the pigment particles to and over, respectively, the surface of the thermoplastic base material.

The afterglowing pigment according to the invention preferably contains an alkaline-earth metal-containing aluminate which is doped with one or more transition metals, and/or a mixture comprising zinc sulphide and copper. The afterglowing pigment is in particular an alkaline-earth metal-containing aluminate which is doped with one or more transition metals, and which has a density of approximately 3.5 g/ml. The afterglowing pigment has an average particle size distribution of 1 - 100 µm, preferably of 5 - 50 µm and in particular of 10 - 25 µm. The afterglowing pigment can be exposed to light having a wave-range of approximately 350 - 400 nm, preferably of approximately 380 - 400 nm. The afterglowing pigment preferably emits light, wherein the wavelength maximum lies at approximately 520 nm and wherein the wave-range of the emitted light is approximately 475 - 575 nm.

The persistence and intensity of the afterglow according to DIN 67510, part 4 (1995) of the afterglowing pigment is at least 1,350 minutes, preferably at least 2,000 minutes with a luminosity limit of 0.3 mcd/m². The luminous intensity of the light being emitted by the afterglowing pigment is at least 170 mcd/m² and preferably at least 400 mcd/m² after 5 minutes, at least 25 mcd/m² and preferably at least 65 mcd/m² after 30 minutes, and at least 5 mcd/m² and preferably at least 11 mcd/m² after 120 minutes.

The afterglowing composition according to the invention preferably emits a yellow to yellow-greenish light.

The invention also relates to a product provided with the afterglowing composition according to the invention. Such a product preferably has a hardness ranging from 50 - 95° Shore A. The invention furthermore relates to the use of such a product as a safety-enhancing medium.

In order to provide a better understanding of the invention, an example of an afterglowing composition according to the invention, products from an afterglowing composition according to the invention and the use of such a product as a safety-enhancing medium will be described below.

A composition according to the invention is obtained by mixing 100 g of a thermoplastic rubber, for example a granulated material of type Kraton®G-series, which is a styrene-ethylene/butylene-styrene block copolymer which is marketed by Shell Chemical Company, with 6 g of an afterglowing alkaline-earth pigment. This SEBS base material is used as granulated material having a diameter of approximately 5 mm and a specific mass of about 1.1 g/cm³.

In order to obtain a satisfactory mixture in a closed mixing unit of the afterglowing pigment, which has a particle size of about 0.015 mm and a specific weight of 3.5 g/cm³, and the SEBS granulates, the interpolation of an adhesive is required, which adhesive is added as a viscous oil (for example the Risella®oil marketed by Shell Chemical Company, which is a white medicinal oil) in an amount of 1 g. A satisfactory homogeneous dispersion of the heavy pigment to the granulated material is obtained by adding said adhesive to the granulated material first, after which the pigment is bonded thereto.

The afterglowing composition thus obtained is then charged to an extruder or injection moulding machine and subsequently processed, which methods are well-known to those skilled in the art.

Products which can be obtained by means of the injection moulding method are tiles, which may or may not possess a profile or a texture.

Products which can be obtained by means of the extrusion method are sections, angle sections, tubes, hoses, cable sheaths, etc.

An very advantageous product is a floor tile, which has a hardness ranging from 70 - 95° Shore A. The products obtained in the above-described manner will emit their light for example in emergency situations, such as an indoor fire or a power failure. By providing floor tiles in a particular pattern leading towards an emergency exit, such products enhance the safety.

It is also possible to incorporate a message, for example an arrow, in such a floor tile for this purpose

## Claims

1. An afterglowing composition with a base of a synthetic rubber and an afterglowing pigment, **characterized in that** said synthetic rubber is a thermoplastic rubber, wherein the composition is provided with an adhesive for bonding the afterglowing pigment to the thermoplastic rubber base material causing an improved mixture thereof.

2. A afterglowing composition according to claim 1, **characterized in that** said composition comprises 0.1 - 30 % by weight of an afterglowing pigment.

3. An afterglowing composition according to claim 1 or 2, **characterized in that** said thermoplastic rubber is a block copolymer selected from the group consisting of SBS, SIS and SEBS.

4. An afterglowing composition according to claim 3, **characterized in that** said thermoplastic rubber is SEBS.

5. An afterglowing composition according to anyone of the preceding claims 1-4, **characterized in that** said adhesive is present in said composition in a concentration of 0.1 - 2 % by weight.

6. An afterglowing composition according to anyone of the preceding claims 1-5, **characterized in that** said adhesive is a medium with a base of a viscous oil, which oil is at least partially transparent and which adhesive is a medium with a base of a viscous oil, which oil is at least partially transparent and which preferably has a viscosity of 50 - 2,000 mPa.s, more preferably of 100 - 1,000 mPa.s.

7. An afterglowing composition according to any one of the preceding claims 1-6, **characterized in that** said afterglowing pigment has a persistence of at least 1,350 minutes, preferably of 2,000 minutes with a luminosity of 0.3 mcd/m².

8. A product obtained from an afterglowing composition according to any one of the claims 1 - 7.

9. A product according to claim 8, **characterized in that** said product has a hardness ranging from 70 ∼ 95° Shore A.

10. Use of a product according to claim 8 or 9 as a safety-enhancing medium.

## Patentansprüche

1. Nachleuchtende Zusammensetzung auf Basis eines synthetischen Kautschuks und eines nachleuchtenden Pigments, **dadurch gekennzeichnet, daß** besagter synthetischer Kautschuk ein thermoplastischer Kautschuk ist, wobei die Zusammensetzung mit einem Klebstoff zur Bindung des nachleuchtenden Pigments an das thermoplastische Kautschuk-Basismaterial versehen ist, was eine verbesserte Mischung derselben bewirkt.

2. Nachleuchtende Zusammensetzung nach Anspruch 1, **dadurch gekennzeichnet, daß** besagte Zusammensetzung 0,1 bis 30 Gew.-% eines nachleuchtenden Pigments umfaßt.

3. Nachleuchtende Zusammensetzung nach Anspruch 1 oder 2, **dadurch gekennzeichnet, daß** besagter thermoplastischer Kautschuk ein Blockcopolymer ist, das ausgewählt ist aus der Gruppe, die aus SBS, SIS und SEBS besteht.

4. Nachleuchtende Zusammensetzung nach Anspruch 3, **dadurch gekennzeichnet, daß** besagter thermoplastischer Kautschuk SEBS ist.

5. Nachleuchtende Zusammensetzung nach einem der vorangehenden Ansprüche 1 bis 4, **dadurch gekennzeichnet, daß** besagter Klebstoff in besagter Zusammensetzung in einer Konzentration von 0,1 bis 2 Gew.-% vorhanden ist.

6. Nachleuchtende Zusammensetzung nach einem der vorangehenden Ansprüche 1 bis 5, **dadurch gekennzeichnet, daß** besagter Klebstoff ein Medium auf Basis eines viskosen Öls ist, wobei dieses Öl wenigstens teilweise durchsichtig ist, und das vorzugsweise eine Viskosität von 50 bis 2000 mPa.s, bevorzugter von 100 bis 1000 mPa.s besitzt.

7. Nachleuchtende Zusammensetzung nach einem der vorangehenden Ansprüche 1 bis 6, **dadurch gekennzeichnet, daß** besagtes nachleuchtendes Pigment eine Persistenz von wenigstens 1.350 Minuten, vorzugsweise von 2.000 Minuten mit einer Leuchtkraft von 0,3 mcd/m² besitzt.

8. Produkt, das aus einer nachleuchtenden Zusammensetzung nach einem der Ansprüche 1 bis 7 erhalten ist.

9. Produkt nach Anspruch 8, **dadurch gekennzeichnet, daß** besagtes Produkt eine Härte im Bereich von 70 bis 95° Shore A besitzt.

10. Verwendung eines Produkts nach Anspruch 8 oder 9 als ein sicherheitsförderndes Mittel.

## Revendications

1. Composition à rémanence lumineuse, ayant une base d'un caoutchouc de synthèse et un pigment à rémanence lumineuse, **caractérisée en ce que** le caoutchouc de synthèse est un caoutchouc thermoplastique, et la composition possède un adhésif destiné à lier le pigment à rémanence lumineuse au matériau à base de caoutchouc thermoplastique en provoquant un meilleur mélange.

2. Composition à rémanence lumineuse selon la revendication 1, **caractérisée en ce que** la composition contient 0,1 à 30 % en poids d'un pigment à rémanence lumineuse.

3. Composition à rémanence lumineuse selon la revendication 1 ou 2, **caractérisée en ce que** le caoutchouc thermoplastique est un copolymère séquencé choisi dans le groupe constitué par les copolymères SBS, SIS et SEBS.

4. Composition à rémanence lumineuse selon la revendication 3, **caractérisée en ce que** le caoutchouc thermoplastique est un copolymère SEBS.

5. Composition à rémanence lumineuse selon l'une quelconque des revendications précédentes 1 à 4, **caractérisée en ce que** l'adhésif est présent dans la composition à une concentration comprise entre 0,1 et 2 % en poids.

6. Composition à rémanence lumineuse selon l'une quelconque des revendications précédentes 1 à 5, **caractérisée en ce que** l'adhésif est une matière ayant une base d'huile visqueuse, cette huile étant au moins partiellement transparente et ayant de préférence une viscosité comprise entre 50 et 2 000 mPa.s et de préférence entre 100 et 1 000 mPa.s.

7. Composition à rémanence lumineuse selon l'une quelconque des revendications précédentes 1 à 6, **caractérisée en ce que** le pigment à rémanence lumineuse présente une persistance d'au moins 1 350 min et de préférence d'au moins 2 000 min avec une luminosité de 0,3 mcd/m².

8. Produit obtenu à partir de la composition à rémanence lumineuse selon l'une quelconque des revendications 1 à 7.

9. Produit selon la revendication 8, **caractérisé en ce que** le produit a une dureté Shore A comprise entre 70 et 95°.

10. Application d'un produit selon la revendication 8 ou 9 comme matière accroissant la sécurité.
